# FASCICULE DE BREVET EUROPEEN

(11) **EP 2 870 056 B1**
(45) Date de publication et mention de la délivrance du brevet: **27.07.2016**
(21) Numéro de dépôt: 13728482.4
(22) Date de dépôt: 24.05.2013
(51) Int. Cl.: B62D 25/14, B62D 25/08

(54) **TRAVERSE INFERIEURE DE BAIE DE PARE-BRISE ETANCHE AU BRUIT**
UNTERER QUERTRÄGER ZUR ÖFFNUNG EINER SCHALLDICHTEN WINDSCHUTZSCHEIBE
SOUNDPROOF WINDSHIELD OPENING LOWER CROSS MEMBER

(30) Priorité: 06.07.2012 FR 1256505
(43) Date de publication de la demande: 13.05.2015
(73) Titulaire: Peugeot Citroën Automobiles SA, 78140 Vélizy Villacoublay (FR)
(72) Inventeur: MARTINET, Gilles, F-70400 Mignavillers (FR)
(86) Numéro de dépôt international: PCT/FR2013/051141
(87) Numéro de publication internationale: WO 2014/006287

(56) Documents cités:
- EP-A2- 1 939 074
- DE-A1-102009 058 285

## Description

L'invention s'adresse aux traverses inférieures de baie de véhicule, aux véhicules qui les comprennent ainsi qu'à leur procédé de fabrication. Le document DE 10 2009 058 285 A1 décrit une traverse inférieure selon le préambule de la revendication 1.

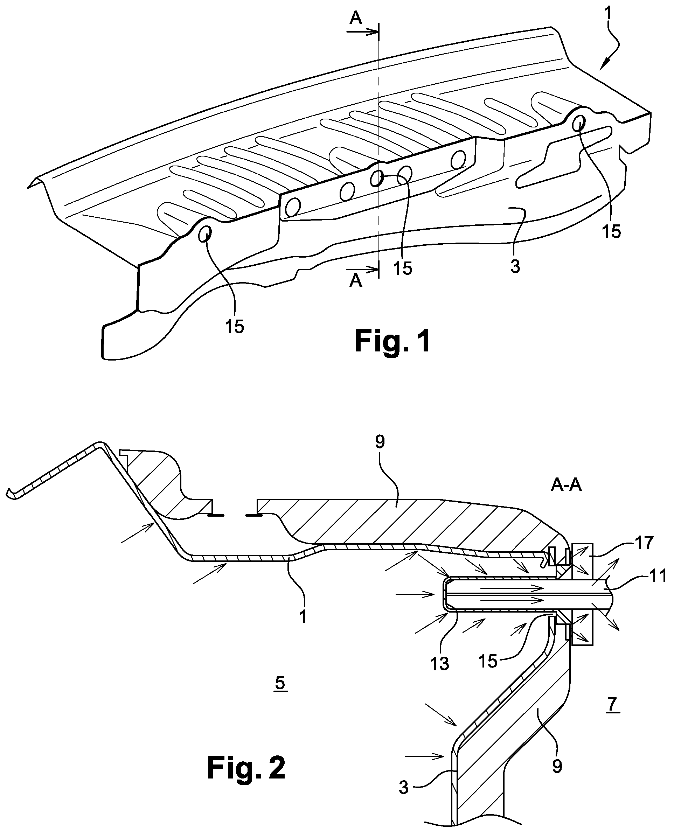

La figure 1 présente un ensemble classique formé d'une traverse inférieure de baie 1 et d'un tablier 3 sur lequel est destiné à être montée la planche de bord d'un véhicule. La traverse inférieure de baie 1 est un élément de structure de caisse formée d'une pièce de tôle emboutie s'étendant transversalement le long du bord inférieur de l'ouverture du pare-brise. Le tablier avant 3 s'étend également transversalement et est situé sensiblement sous la traverse inférieure de baie 1 qu'il relie au plancher du véhicule (non représenté). Le tablier 3 est fixé sur la traverse inférieure de baie 1 de manière définitive, par exemple par soudage de leurs bords de jonction.

La figure 2 présente une vue en coupe de cet ensemble selon la ligne de coupe A-A agrémenté d'éléments supplémentaires. Une fois fixés l'un à l'autre, la traverse inférieur de baie 1 et le tablier avant 3 délimitent le compartiment moteur 5 de l'habitacle 7 du véhicule. Ils sont généralement recouverts d'un élément d'insonorisation 9 afin d'éviter la propagation des ondes sonores (représentées par des flèches) en provenance du compartiment moteur 5 en direction de l'habitacle 7. La planche de bord (non représentée) est fixée sur le tablier 3, généralement au moyen de pilotes 11 emmanchés dans des agrafes 13. Les agrafes 13 sont préalablement enfichées dans des ouvertures 15 situées en partie supérieure du tablier 3, à proximité de son bord de jonction avec la traverse inférieure de baie 1. Par exemple, le nombre d'ouvertures 15 et d'agrafes 13 est de trois.

Il a été constaté que les bruits en provenance du compartiment moteur 5 parvenaient jusqu'à l'habitacle 7 au travers des agrafes 13 et des ouvertures 15. Les agrafes 13 ont classiquement une paroi mince en plastique d'une épaisseur par exemple de 2 mm. Cette paroi ne montre pas le même pouvoir isolant au bruit que la tôle. Pour remédier à ce problème, il a été rajouté des éléments 17 de mousse d'isolation au bruit au niveau des pilotes 11 visant à « refermer » les agrafes 13.

L'ajout de ces éléments 17 présente un coût tant en élément rajouté qu'en termes de procédé de montage puisque il est rajouté du temps de montage. Il serait intéressant de pouvoir trouver une solution pour s'en affranchir sans pour autant laisser les bruits en provenance du compartiment moteur être propagés au sein de l'habitacle du véhicule.

Des solutions ont été proposées pour palier la propagation des vibrations au niveau de la traverse inférieure de baie ou du tablier. Par exemple, le document FR2905664 propose un système de fixation optimisé entre le tablier et la traverse inférieure de baie. Ce système comprend une pièce de solidarisation élastique permettant une diminution des vibrations sur le volant de direction. Malheureusement, la problématique de la propagation des ondes sonores n'est pas abordée. De même, différents dispositifs de fixation de la traverse inférieure de baie sur le tablier sont décrits dans l'art antérieur, et par exemple par le document FR2894922 qui concerne une fixation optimisée entre le tablier et la traverse inférieure de baie comprenant une pièce de solidarisation par scellement chimique. Mais là encore la problématique de la propagation des bruits depuis le compartiment moteur en direction de l'habitacle n'est pas étudiée.

L'invention a pour objet d'apporter une solution à au moins un des inconvénients de l'art antérieur. En particulier, l'invention a pour objectif de proposer une partie avant de structure d'habitacle d'un véhicule qui soit étanche aux bruits en provenance du compartiment moteur.

A cet effet l'invention a pour objet une traverse inférieure de baie destinée à être fixée à un tablier avant de manière à délimiter le compartiment moteur d'un véhicule de son habitacle, ledit tablier présentant en partie supérieure au moins une ouverture pour le passage d'une agrafe en vue de la fixation d'une planche de bord, ladite traverse inférieure de baie étant remarquable en ce qu'elle comprend au moins un embouti positionné pour être aligné avec au moins une ouverture située en partie haute du tablier avant, et en ce que le ou les emboutis forment un ou des reliefs destinés à s'étendre en direction du compartiment moteur.

Selon des modes particuliers de réalisation, l'ensemble peut comprendre une ou plusieurs des caractéristiques suivantes, prises isolément ou selon toutes les combinaisons techniquement possibles :
- La traverse est destinée à être fixée au tablier avant par l'intermédiaire d'un bord de jonction et au moins un embouti est débouchant sur ledit bord de jonction.
- Au moins un embouti est dimensionné pour contourner l'ouverture avec laquelle il est aligné afin que ladite ouverture débouche de part et d'autre dans l'habitacle du véhicule.
- Au moins un embouti est dimensionné pour contourner l'ouverture avec laquelle il est aligné afin que l'agrafe s'étendant par ladite ouverture s'étende dans l'habitacle du véhicule.
- Au moins un embouti délimite un logement apte à recevoir une agrafe de fixation de la planche de bord sur le tablier avant, ladite agrafe étant destinée à être enfichée dans l'ouverture dudit tablier alignée avec ledit embouti.
- Ladite traverse présente un côté inférieur destiné à faire face au compartiment moteur et un côté supérieur destiné à faire face à l'habitacle, et au moins un embouti est configuré pour que l'agrafe de fixation de la planche de bord sur le tablier avant, s'étende en regard du côté supérieur de la traverse inférieure de baie lorsque ladite agrafe est enfichée dans l'ouverture du tablier alignée avec ledit embouti.
- Au moins un embouti a une profondeur et une hauteur déterminées pour que sa surface n'entre pas en contact avec l'agrafe de fixation lorsqu'elle est enfichée dans l'ouverture située en partie supérieure du tablier et alignée avec ledit embouti.
- Ladite traverse est destinée à être fixée au tablier avant par l'intermédiaire d'un bord de jonction, et ledit bord de jonction est un bord tombé. De préférence, le bord tombé suit le profil du ou des emboutis.
- La traverse inférieure de baie présente au moins trois emboutis.

L'invention a également pour objet un ensemble formé par une traverse inférieure de baie telle que définie plus haut et un tablier avant. De manière optionnelle, la traverse inférieure de baie présente, sur son bord de jonction au tablier avant, un nombre d'emboutis égal ou supérieur au nombre d'ouvertures présentées par le tablier avant en partie supérieure.

L'invention a encore pour objet un véhicule, par exemple un véhicule automobile, remarquable en ce qu'il présente une traverse de baie telle que définie ci-dessus ou un ensemble tel que défini ci-avant.

Enfin, l'invention a pour objet un procédé de fabrication d'une traverse inférieure de baie telle que définie plus avant remarquable en ce qu'il comprend une opération d'emboutissage propre à former au moins un embouti formant un relief destiné à s'étendre en direction du compartiment moteur et débouchant sur le bord de jonction de ladite traverse pour sa fixation à un tablier avant. De préférence l'opération d'emboutissage comprend en outre la réalisation d'un bord tombé au niveau dudit bord de jonction, ledit bord tombé étant destiné à s'étendre en direction du compartiment moteur du véhicule.

Comme on l'aura compris à la lecture de la définition qui vient d'en être donnée, l'invention consiste selon un premier aspect à proposer une nouvelle traverse inférieure de baie qui va contourner les agrafes de fixation de la planche de bord sur le tablier, de manière à ce qu'elles s'étendent dans l'habitacle du véhicule et non plus dans le compartiment moteur comme dans l'art antérieur. L'invention est remarquable en ce qu'elle remplace les solutions antérieures d'isolation phonique mettant en oeuvre des éléments de mousse d'isolation absorbant les ondes sonores par une solution impliquant une correction acoustique selon laquelle les ondes sonores ne parviennent plus jusqu'à l'agrafe de fixation mais sont réverbérées par la traverse inférieure de baie qui contourne lesdites agrafes de façon à les isoler du compartiment moteur.

Selon un deuxième aspect de l'invention, on notera que seule la traverse de baie est modifiée pour répondre au problème posé. Le tablier avant, les agrafes et les éléments d'insonorisation sont inchangés par rapport à l'art antérieur. L'invention propose la formation de logements aptes à recevoir les agrafes de fixation de façon à les isoler du compartiment moteur et à les confiner dans l'habitacle du véhicule. L'invention permet par une simple modification de forme de la traverse de baie de s'affranchir de l'emploi d'éléments d'isolation phonique sur les pilotes reçus dans les agrafes. L'invention diminue donc le poids global du véhicule et simplifie son procédé de montage.

L'invention sera bien comprise et d'autres caractéristiques et avantages apparaîtront plus clairement à la lecture de la description qui suit donnée en référence aux planches de dessins sur lesquelles :
- La figure 1 est une représentation élevée d'un ensemble formé par une traverse inférieure de baie et un tablier selon l'art antérieur.
- La figure 2 est une représentation en coupe d'un ensemble formé par une traverse inférieure de baie et un tablier selon l'art antérieur, la coupe étant réalisée au niveau d'une agrafe.
- La figure 3 est une représentation en coupe d'un ensemble formé par une traverse inférieure de baie et un tablier selon l'invention, la coupe étant réalisée au niveau d'une agrafe.
- La figure 4 est une représentation en coupe d'un ensemble formé par une traverse inférieure de baie et un tablier selon l'invention illustrant le positionnement de l'agrafe relativement à l'embouti.

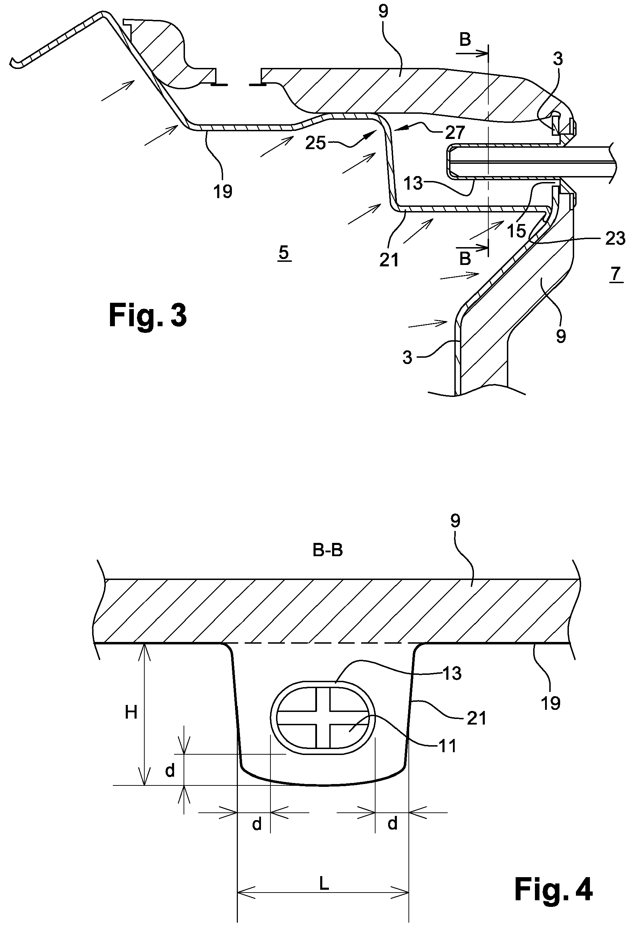

Sur les figures les mêmes références désignent des éléments identiques ou similaires. Les figures 1 et 2 ayant déjà été commentées dans la partie introductive, on se référera maintenant à la figure 3 présentant une vue en coupe d'un agencement formé par une traverse inférieure de baie et un tablier selon l'invention

Selon un mode préféré de l'invention, la traverse inférieure de baie 19 présente au moins un embouti 21 sur son bord de jonction 23 destiné à être soudé au tablier avant 3. Au moins un embouti 21 est aligné avec une ouverture 15 située en partie supérieure du tablier avant 3. De préférence, le nombre et la disposition des emboutis 21 sont choisis pour que chaque ouverture 15 située en partie supérieure du tablier avant 3 soit alignée avec un embouti 21. Ils sont par exemple au nombre de trois. Chaque embouti 21 forme un relief s'étendant en direction du compartiment moteur 5, c'est-à-dire en direction du plancher du véhicule.

Les emboutis 21 sont dimensionnés pour contourner les ouvertures 15 du tablier. Ainsi, les ouvertures 15 situées en partie supérieure du tablier vont déboucher de part et d'autre dans l'habitacle 7 du véhicule. La traverse inférieure de baie 19 présente une face inférieure 25 destinée à être située dans le compartiment moteur 5 et une face supérieure 27 destinée à être située dans l'habitacle 7 du véhicule. Le ou les emboutis 21 sont configurés pour que la ou les agrafes 13 de fixation de la planche de bord sur le tablier 3, s'étendent en regard de la face supérieure 27 de la traverse inférieure de baie 19, lorsqu'elles sont enfichées dans les ouvertures 15. Les emboutis 21 vont former des logements, ou niches, propres à recevoir les agrafes 13 de manière à les isoler du compartiment moteur 5.

On comprend aisément qu'afin de pouvoir remplir leur fonction, les emboutis 21 doivent être dimensionnés pour que les agrafes 13 ne touchent pas la traverse inférieure de baie 19, de manière à ne pas propager les vibrations sonores du fait d'un contact physique entre les deux éléments. C'est pourquoi l'homme du métier aura avantage à ce que le ou les emboutis 21 aient une profondeur supérieure à la longueur de la portion de l'agrafe 13 qu'ils reçoivent, de manière à ce que l'extrémité de l'agrafe 13 ne touche pas le fond de l'embouti 21. De même, et comme illustrée sur la figure 4, le ou les emboutis 21 ont avantageusement une hauteur H et une largeur L suffisante pour que la ou les agrafes 13 enfichées dans les ouvertures 15 du tablier soit suffisamment éloignées de la surface de la traverse inférieure de baie 19 pour ne pas entrer en contact avec elle. L'agrafe de fixation 13 est centrée en position de manière à être tenue éloignée des parois de l'embouti 21. Par exemple, la distance d séparant l'agrafe 13 des parois de l'embouti 21 est de 10 mm. L'embouti 21 aura alors par exemple une hauteur H d'environ 50 mm pour une largeur L d'environ 55 mm. On comprend que ces dimensions varient en fonction des dimensions des agrafes envisagées.

La fixation de la traverse inférieure de baie 19 sur le tablier avant 3 se fait par son bord de jonction 23. Selon l'invention, la traverse inférieure de baie 19 présente un bord de jonction 23 replié par emboutissage de manière à former un bord tombé. Le bord de jonction 23 tombé va être placé contre le côté du tablier faisant face au compartiment moteur 5 en vue de leur fixation l'un à l'autre par soudure. Le bord de jonction 23 tombé s'étend avantageusement selon la même direction que le ou les emboutis 21, si bien qu'ils peuvent être formés par la même opération d'emboutissage.

L'un des avantages de l'invention est que la présence d'au moins un embouti 21 et de préférence d'au moins trois emboutis 21 débouchant sur le bord de jonction 23 de la traverse inférieure de baie 19 permet d'améliorer le comportement de la tôle au voisinage de ce bord 23 et en particulier d'en augmenter la raideur.

Selon un mode de réalisation possible de l'invention, la traverse inférieure de baie 19 présente un nombre d'emboutis 21 sur son bord de jonction 23 supérieur au nombre d'ouvertures 15 présentées par le tablier avant 3 en partie supérieure. Ceci est avantageux, soit comme on l'a vu pour augmenter encore la raideur de la tôle, soit pour conférer un caractère modulaire à la traverse inférieure de baie qui s'adapte ainsi à différents types de tablier avant différenciés les uns des autres par leur nombre d'ouvertures en partie supérieure ou par la disposition de ces ouvertures.

## Revendications

1. Traverse inférieure de baie (19) destinée à être fixée à un tablier (3) avant de manière à délimiter le compartiment moteur (5) d'un véhicule de son habitacle (7), ledit tablier (3) présentant en partie supérieure au moins une ouverture (15) pour le passage d'une agrafe (13) en vue de la fixation d'une planche de bord, ladite traverse inférieure de baie (19) étant **caractérisée en ce qu'**elle comprend au moins un embouti (21) positionné pour être aligné avec au moins une ouverture (15) située en partie haute du tablier (3) avant, et **en ce que** le ou les emboutis forment un ou des reliefs destinés à s'étendre en direction du compartiment moteur (5).

2. Traverse inférieure de baie (19) selon la revendication 1, ladite traverse (19) étant destinée à être fixée au tablier (3) avant par l'intermédiaire d'un bord de jonction (23) **caractérisée en ce qu'**au moins un embouti (21) est débouchant sur ledit bord de jonction (23).

3. Traverse inférieure de baie (19) selon l'une des revendications 1 ou 2, **caractérisé en ce qu'**au moins un embouti (21) est dimensionné pour contourner l'ouverture (15) avec laquelle il est aligné afin que ladite ouverture (15) débouche de part et d'autre dans l'habitacle (7) du véhicule

4. Traverse inférieure de baie (19) selon l'une des revendications 1 à 3 **caractérisée en ce qu'**au moins un embouti (21) délimite un logement apte à recevoir une agrafe (13) de fixation de la planche de bord sur le tablier (3) avant, ladite agrafe (13) étant destinée à être enfichée dans l'ouverture (15) dudit tablier (3) alignée avec ledit embouti (21).

5. Traverse inférieure de baie (19) selon l'une des revendications 1 à 4, ladite traverse (19) présentant un côté inférieur (25) destiné à faire face au compartiment moteur (5) et un côté supérieur (27) destiné à faire face à l'habitacle (7), **caractérisée en ce qu'**au moins un embouti (21) est configuré pour que l'agrafe (13) de fixation s'étende en regard du côté supérieur (27) de la traverse (19) lorsque ladite agrafe (13) est enfichée dans l'ouverture (15) alignée avec ledit embouti (21).

6. Traverse inférieure de baie (19) selon l'une des revendications 1 à 5 **caractérisée en ce qu'**au moins un embouti (21) a une profondeur et une hauteur déterminées pour que sa surface n'entre pas en contact avec l'agrafe (13) de fixation lorsqu'elle est enfichée dans l'ouverture (15) alignée avec ledit embouti (21).

7. Traverse inférieure de baie (19) selon l'une des revendications 1 à 6, ladite traverse (19) étant destinée à être fixée au tablier (3) avant par l'intermédiaire d'un bord de jonction (23), **caractérisée en ce que** ledit bord de jonction (23) est un bord tombé.

8. Traverse inférieure de baie (19) selon l'une des revendications 1 à 6 **caractérisée en ce qu'**elle présente au moins trois emboutis (21).

9. Ensemble formé par une traverse inférieure de baie (19) selon l'une des revendications 1 à 8 et un tablier avant, de préférence la traverse inférieure de baie (19) présente un nombre d'emboutis (21) égal ou supérieur au nombre d'ouvertures (15) présentées par le tablier (3) avant en partie supérieure.

10. Véhicule **caractérisé en ce qu'**il présente une traverse inférieure de baie (19) selon l'une des revendications 1 à 8 ou un ensemble selon la revendication 9.

## Patentansprüche

1. Unterer Querträger einer Karosserieöffnung (19), der dazu bestimmt ist, an einer vorderen Stirnwand (3) derart befestigt zu sein, dass sie einen Motorraum (5) eines Fahrzeugs von seiner Fahrgastzelle (7) abgrenzt, wobei die Stirnwand (3) im oberen Teil mindestens eine Öffnung (15) für das Durchgehen einer Klammer (13) zum Befestigen eines Armaturenbretts aufweist, unterer Querträger einer Karosserieöffnung (19) **dadurch gekennzeichnet, dass** er mindestens eine Einstülpung (21) umfasst, die positioniert ist, um mit mindestens einer Öffnung (15), die im oberen Teil der vorderen Stirnwand (3) liegt, ausgerichtet zu sein, und dass die Einstülpung oder die Einstülpungen ein oder mehrere Reliefs bilden, die dazu bestimmt sind, sich in Richtung des Motorraums (5) zu erstrecken.

2. Unterer Querträger (19) nach Anspruch 1, wobei der Querträger (19) dazu bestimmt ist, an der vorderen Stirnwand (3) über einen Verbindungsrand (23) befestigt zu sein, **dadurch gekennzeichnet, dass** mindestens eine Einstülpung (21) auf dem Verbindungrand (23) mündet.

3. Unterer Querträger (19) nach einem der Ansprüche 1 oder 2, **dadurch gekennzeichnet, dass** mindestens eine Einstülpung (21) bemessen ist, um die Öffnung (15), mit der sie ausgerichtet ist, zu umgehen, so dass die Öffnung (15) zu beiden Seiten in die Fahrgastzelle (7) des Fahrzeugs mündet.

4. Unterer Querträger (19) nach einem der Ansprüche 1 bis 3, **dadurch gekennzeichnet, dass** mindestens eine Einstülpung (21) eine Aufnahme abgrenzt, die dazu geeignet ist, eine Befestigungsklammer (13) des Armaturenbretts auf der vorderen Stirnwand (3) aufzunehmen, wobei die Klammer (13) dazu bestimmt ist, in die Öffnung (15) der Stirnwand (3), die mit der Einstülpung (21) ausgerichtet ist, eingesteckt zu werden.

5. Unterer Querträger (19) nach einem der Ansprüche 1 bis 4, wobei der Querträger (19) eine untere Seite (25) aufweist, die dazu bestimmt ist, dem Motorraum (5) gegenüberzuliegen, und eine obere Seite (27), die dazu bestimmt ist, der Fahrgastzelle (7) gegenüberzuliegen, **dadurch gekennzeichnet, dass** mindestens eine Einstülpung (21) ausgelegt ist, damit sich die Befestigungsklammer (13) gegenüber der oberen Seite (27) des Querträgers (19) erstreckt, wenn die Klammer (13) in die Öffnung (15), die mit der Einstülpung (21) ausgerichtet ist, eingesteckt wird.

6. Unterer Querträger einer Karosserieöffnung (19) nach einem der Ansprüche 1 bis 5, **dadurch gekennzeichnet, dass** mindestens eine Einstülpung (21) eine bestimmte Tiefe und eine Höhe hat, so dass ihre Oberfläche nicht mit der Befestigungsklammer (13) in Berührung tritt, wenn sie in die Öffnung (15), die mit der Einstülpung (21) ausgerichtet ist, eingesteckt ist.

7. Unterer Querträger einer Karosserieöffnung (19) nach einem der Ansprüche 1 bis 6, wobei der Querträger (19) dazu bestimmt ist, an der vorderen Stirnwand (3) über einen Verbindungsrand (23) befestigt zu sein, **dadurch gekennzeichnet, dass** der Verbindungsrand (23) eine Bördelung ist.

8. Unterer Querträger einer Karosserieöffnung (19) nach einem der Ansprüche 1 bis 6, **dadurch gekennzeichnet, dass** er mindestens drei Einstülpungen (21) aufweist.

9. Baugruppe, die aus einem unteren Querträger einer Karosserieöffnung (19) nach einem der Ansprüche 1 bis 8 und einer vorderen Stirnwand gebildet ist, wobei der untere Querträger einer Karosserieöffnung (19) vorzugsweise eine Anzahl von Einstülpung (21) gleich oder größer der Anzahl von Öffnungen (15), die die vordere Stirnwand (3) im oberen Teil aufweist, aufweist.

10. Fahrzeug, **dadurch gekennzeichnet, dass** es einen unteren Querträger einer Karosserieöffnung (19) nach einem der Ansprüche 1 bis 8 oder eine Baugruppe nach Anspruch 9 aufweist.

## Claims

1. An opening lower cross member (19) intended to be fixed to a front bulkhead (3) so as to delimit the engine compartment (5) of a vehicle from its passenger compartment (7), said bulkhead (3) having in its upper part at least one aperture (15) for the passage of a fastener (13) for the attachment of an instrument panel, said lower opening cross member (19) being **characterized in that** it includes at least one pressed feature (21) positioned so that it aligns with at least one aperture (15) situated in the upper part of the front bulkhead (3), and **in that** the pressed feature(s) form one or more reliefs intended to extend towards the engine compartment (5).

2. The opening lower cross member (19) according to Claim 1, said cross member (19) being intended to be fixed to the front bulkhead (3) through a joining edge (23), **characterized in that** at least one pressed feature (21) is opening onto said joining edge (23).

3. The opening lower cross member (19) according to one of Claims 1 or 2, **characterized in that** at least one pressed feature (21) is dimensioned to pass around the aperture (15) with which it is aligned so that said aperture (15) opens on both sides in the passenger compartment (7) of the vehicle.

4. The opening lower cross member (19) according to one of Claims 1 to 3, **characterized in that** at least one pressed feature (21) delimits a housing able to receive a fastener (13) for the attachment of the instrument panel on the front bulkhead (3), said fastener (13) being intended to be inserted in the aperture (15) of said bulkhead (3) aligned with said pressed feature (21).

5. The opening lower cross member (19) according to one of Claims 1 to 4, said cross member (19) having a lower side (25) intended to face the engine compartment (5) and an upper side (27) intended to face the passenger compartment (7), **characterized in that** at least one pressed feature (21) is configured so that the attachment fastener (13) extends opposite the upper side (27) of the cross member (19) when said fastener (13) is inserted in the aperture (15) aligned with said pressed feature (21).

6. The opening lower cross member (19) according to one of Claims 1 to 5, **characterized in that** at least one pressed feature (21) has a depth and a height which are determined so that its surface does not come in contact with the attachment fastener (13) when it is inserted in the aperture (15) aligned with said pressed feature (21).

7. The opening lower cross member (19) according to one of Claims 1 to 6, said cross member (19) being intended to be fixed to the front bulkhead (3) through a joining edge (23), **characterized in that** said joining edge (23) is a flanged edge.

8. The opening lower cross member (19) according to one of Claims 1 to 6, **characterized in that** it has at least three pressed features (21).

9. An assembly formed by an opening lower cross member (19) according to one of Claims 1 to 8 and a front bulkhead, preferably the opening lower cross member (19) has a number of pressed features (21) equal to or greater than the number of apertures (15) presented by the front bulkhead (3) in the upper part.

10. A vehicle, **characterized in that** it has an opening lower cross member (19) according to one of Claims 1 to 8 or an assembly according to Claim 9.
